# EUROPÄISCHE PATENTSCHRIFT

(11) **EP 0 676 990 B1**
(45) Veröffentlichungstag und Bekanntmachung des Hinweises auf die Patenterteilung: **02.05.1997**
(21) Anmeldenummer: 94901821.2
(22) Anmeldetag: 19.11.1993
(51) Int. Cl.: B23B 29/034

(54) **KLEMMHALTER FÜR SCHNEIDPLATTEN**
CLAMP FOR BLANKING DIES
PORTE-PLAQUETTE POUR MATRICES DE DECOUPAGE

(30) Priorität: 30.12.1992 DE 4244485
(43) Veröffentlichungstag der Anmeldung: 18.10.1995
(73) Patentinhaber: KOMET Präzisionswerkzeuge Robert Breuning GmbH, D-74354 Besigheim (DE)
(72) Erfinder: SCHEER, Gerhard, D-74369 Löchgau (DE)
(74) Vertreter: Wolf, Eckhard, Dr.-Ing.
(86) Internationale Anmeldenummer: EP9303237
(87) Internationale Veröffentlichungsnummer: WO9415742

(56) Entgegenhaltungen:
- EP-A- 0 058 646
- EP-A- 0 251 405
- WO-A-87/01319
- DE-A- 2 239 601
- DE-A- 3 726 276
- DE-A- 3 926 025
- US-A- 3 427 904

## Beschreibung

Die Erfindung betrifft einen Klemmhalter für Schneidplatten der im Oberbegriff des Patentanspruchs 1 angegebenen Gattung.

Bei bekannten Klemmhaltern (Kurzklemmhalter Typ A für Wendeschneidplatten nach DIN 4985 - Cartridges type A for indexable trowaway inserts), die mit einer oder zwei durch ein schräges Langloch des Halterschafts hindurchgreifenden Befestigungsschrauben in einem Werkzeugträger gespannt werden, ist für die Verstellung des Abstands zwischen der Spannfläche und der wirksamen Schneidenecke eine Querstellschraube vorgesehen, die durch ein Innengewinde des Halterkopfes hindurchgreift und sich mit ihrer Spitze an der Spannfläche des Werkzeugträgers abstützt. Die Handhabung beim Verstellen ist dort recht umständlich: Zunächst muß die Befestigungsschraube gelöst, anschließend die Querstellschraube in der gewünschten Richtung verstellt und schließlich die Befestigungsschraube wieder angezogen werden. Diese Verstellung muß gegebenenfalls mehrfach vorgenommen werden, bis das gewünschte Maß exakt eingestellt ist. Weiter wird bei diesem Verstellvorgang als nachteilig empfunden, daß sich der Einstellwinkel der Schneidplatte beim Verstellen des Abstandsmaßes ändert, was vor allem dann von Nachteil ist, wenn exakt definierte Schultern gedreht werden sollen. Hinzu kommt, daß der Kurzklemmhalter mit seiner Anlagefläche nicht vollflächig auf der Spannfläche des Werkzeugträgers anliegt, sondern daß unter Spaltbildung ein Klemmdreieck gebildet wird, dessen Steifigkeit und Dämpfungsverhalten vor allem bei Schwerzerspanungen oft zu wünschen übrig läßt. Die Querstellschraube ist relativ klein und hat dadurch nur einen kleinen, verschleißanfälligen Schlüsseleingriff und eine kleine, zur Einkerbung in den Werkzeugkörper neigende Stirnfläche.

Aus der WO-A-87/01319 ist ein Klemmhalter der eingangs genannten Art bekannt. Dort weist der spaltförmige Durchbruch einen Z-förmigen Querschnittsverlauf auf, wobei eines der durchbruchseitigen Enden schaftseitig und das andere schneidplattenseitig angeordnet ist. Aufgrund dieser Anordnung benötigt der Durchbruch einen eigens hierfür vorgesehenen axialen Bereich im Halterkopf, der vom Bereich der Plattenausnehmung axial abgesetzt ist. Der Halterkopf und damit der gesamte Klemmhalter baut deshalb relativ lang.

Ausgehend hiervon liegt der Erfindung die Aufgabe zugrunde, einen Klemmhalter der eingangs angegebenen Art dahingehend zu verbessern, daß eine kompaktere Bauweise erzielt werden kann.

Zur Lösung dieser Aufgabe wird die im Patentanspruch 1 angegebene Merkmalskombination vorgesehen. Vorteilhafte Ausgestaltungen und Weiterbildungen der Erfindung ergeben sich aus den abhängigen Ansprüchen.

Die erfindungsgemäße Lösung geht von dem Gedanken aus, daß der Halterschaft starr im Werkzeugträger eingespannt werden kann und daß der Halterkopf gegenüber dem Halterschaft durch Einbringen geeigneter Sollbiegestellen in der gewünschten Richtung mit Hilfe eines Stellorgans elastisch verbiegbar ist. Erfindungsgemäß wird folgende Merkmalskombination vorgeschlagen:
- Der spaltförmige Durchbruch weist einen zum Halterschaft hin randoffenen, durch die beiden schaftseitig angeordneten Durchbruchenden begrenzten bogenförmigen Querschnittsverlauf auf;
- der Querschnittsverlauf erstreckt sich auf der vom Halterschaft abgewandten Seite in den zwischen der Ausnehmung und der Anlagefläche liegenden Bereich des Halterkopfes.

Durch diese Maßnahme wird erreicht, daß der freie Bereich zwischen Ausnehmung, Anlagefläche und Halterschaft besser zur Unterbringung des spaltförmigen Durchbruchs genutzt werden kann.

Die Durchbruchenden sind dabei zweckmäßig in der Nähe des Halterschaftes vorzugsweise in einer zur Anlagefläche senkrechten Ebene angeordnet. Die Biegezonen an den Durchbruchenden bilden dadurch eine Art Gelenkparallelogramm, das eine neigungsfreie Abstandsverstellung gewährleistet.

Bei einem Klemmhalter, bei welchem der Halterkopf auf der der Anlagefläche gegenüberliegenden Seite stufenförmig über den Halterschaft übersteht, ist es zweckmäßig, wenn das außenflächennahe Durchbruchende im überstehenden Teil des Halterkopfes angeordnet ist.

Vorteilhafte Ausgestaltungen der Erfindung sehen vor,
- daß der Durchbruch einen außenseitigen, vorzugsweise zur Anlagefläche parallelen, innenseitig durch eine Flanke eines schaftfesten Auslegers begrenzten Spaltabschnitt aufweist;
- daß der Durchbruch einen anlageflächenseitigen, vorzugsweise zur Anlagefläche parallelen, durch eine Flanke des schaftfesten Auslegers begrenzten Spaltabschnitt aufweist;
- daß der außenflächenseitige Spaltabschnitt über einen schaftfernen, durch eine Stirnflanke des schaftfesten Auslegers begrenzten, vorzugsweise bogenförmigen Querabschnitt mit dem anlageflächenseitigen Spaltabschnitt verbunden ist;
- daß der anlageflächenseitige Spaltabschnitt schaftseitig durch das anlageflächennahe Durchbruchende begrenzt ist;
- daß sich an den außenflächenseitigen Spaltabschnitt ein schräg zur Schaftseite und zur Außenfläche hin verlaufender, durch das außenflächennahe Durchbruchende begrenzter Schrägabschnitt anschließt.

Unter Berücksichtigung dieser Maßnahmen kann das Stellorgan auf verschiedene Weise verwirklicht werden, nämlich
- durch eine von der Außenfläche des Halterkopfes aus betätigbare, in einem Innengewinde des Halterkopfes im wesentlichen senkrecht zur Anlagefläche geführte, den außenflächenseitigen Spaltabschnitt durchdringende und mit ihrer vorzugsweise abgeflachten Stirnfläche gegen den schaftfesten Ausleger anpreßbare Stellschraube;
- durch eine von der Außenfläche her durch den Halterkopf hindurchgreifende, mit ihrer Stirnfläche gegen die Spannfläche des Werkzeugträgers anpreßbare Stellschraube, die vorzugsweise quer durch den Ausleger und die beiden Spaltabschnitte hindurchgreift und die entweder in einem unmittelbar im Halterkopf befindlichen Innengewinde oder im Innengewinde einer von der Anlagefläche her in eine Ausnehmung des Halterkopfes verdrehungssicher eingesetzten, an einem Anschlag des Halterkopfs abstützbaren Gewindebüchse geführt ist;
- durch eine von der Stirnfläche des Halterkopfes aus betätigbare, in einem Innengewinde des Halterkopfes im wesentlichen parallel zur Anlagefläche geführte, den Querabschnitt des Durchbruchs durchdringende und mit einem konischen Teil ihrer Spitze gegen die schräge oder bogenförmige Stirnflanke des Schaftauslegers anpreßbare Stellschraube;
- durch ein in einer Schub- oder Gewindeführung des Werkzeugträgers geführtes und mit einer Kraftkomponente in Verstellrichtung gegen den Werkzeugkopf anpreßbares Stellorgan;
- durch eine als in einem vorzugsweise radial oder axial ausgerichteten Innengewinde des Werkzeugträgers geführte, gegebenenfalls mit einer konischen Spitze versehene Stellschraube;
- durch einen in einer vorzugsweise radialen Gleitführung des Werkzeugträgers geführten Stellkörper, der über ein im Werkzeugträger angeordnetes, vorzugsweise eine Stellstange mit Keilschräge aufweisendes Keilgetriebe betätigbar ist.

Um mit einfachen Mitteln eine definierte und reproduzierbare Abstandsverstellung zu ermöglichen, ist im Bereich des Stellschraubenkopfes eine Skalenteilung vorgesehen.

Zur Aussteifung der Klemmverbindung zwischen Klemmhalter und Werkzeugträger ist es von Vorteil, wenn der spaltförmige Durchbruch gegenüber der Anlagefläche in Durchbruchrichtung um einen vorzugsweise von der Schneidplattenseite aus divergierenden Winkel von 1° bis 10°, vorzugsweise 2° bis 5° schräg verläuft.

Der eingeschlossene spaltförmige Durchbruch wird zweckmäßig drahterodiert. Zur Erleichterung der Herstellung können dazu die Durchbruchenden einen gegenüber dem Spaltquerschnitt erweiterten Querschnitt aufweisen, der durch einen Bohrvorgang erzeugt werden kann.

Im folgenden wird die Erfindung anhand einiger in der Zeichnung in schematischer Weise dargestellter Ausführungsbeispiele näher erläutert. Es zeigen
- Fig. 1a bis c: drei verschiedene Seitenansichten eines Kurzklemmhalters;
- Fig. 1d: einen Längsschnitt durch den Halterkopf entlang der Schnittlinie D-D der Fig. 1b;
- Fig. 1e: einen Schnitt durch den Halterschaft entlang der Schnittlinie E-E der Fig. 1b;
- Fig. 1f: eine Seitenansicht der Stellschraube des Kurzklemmhalters nach Fig. 1a bis e;
- Fig. 2: eine Seitenansicht eines Kurzklemmhalters entsprechend Fig. 1a mit stirnseitig betätigbarer Stellschraube;
- Fig. 3: eine Seitenansicht eines Kurzklemmhalters mit im Werkzeugträger angeordneter radialer Stellschraube;
- Fig. 4: eine Seitenansicht eines Kurzklemmhalters mit im Werkzeugträger angeordneter radialer Stellschraube;
- Fig. 5: eine Seitenansicht eines Kurzklemmhalters mit Stellkörper und Stellstange im Werkzeugträger.
- Fig. 6a bis c: eine Seitenansicht, eine Stirnseitenansicht und einen Längsschnitt eines Kurzklemmhalters mit Gewindebüchse und durchgehender Stellschraube;
- Fig. 7a bis c: ein abgewandeltes Ausführungsbeispiel eines Kurzklemmhalters mit Gewindebüchse und durchgehender Stellschraube

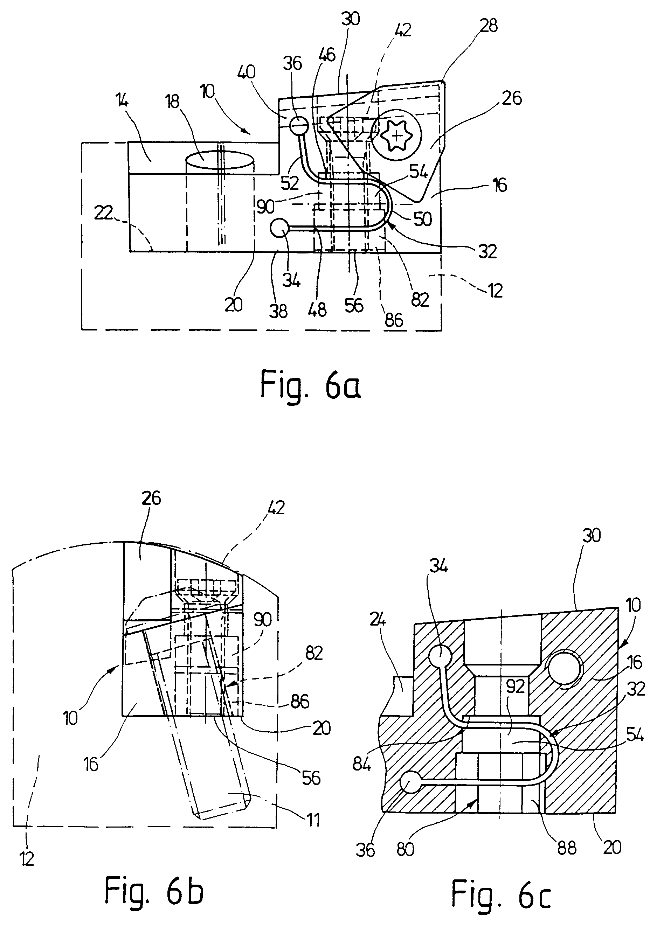

Die in der Zeichnung dargestellten Kurzklemmhalter 10 sind zur Aufnahme von Wendeschneidplatten aus Hartmetall, Schneidkeramik oder anderen Schneidstoffen bestimmt und werden überwiegend für Dreharbeiten verwendet. Die Kurzklemmhalter 10 werden hierzu mit einer Spannschraube 11 (Fig. 6b) an einem vorzugsweise als Bohrstange ausgebildeten Werkzeugträger 12 befestigt.

Die Kurzklemmhalter bestehen im wesentlichen aus einem Halterschaft 14 und einem stirnseitig am Halterschaft 14 angeformten, stufenförmig nach außen über diesen überstehenden Halterkopf 16. Der Halterschaft 14 weist eine von einem Langloch 18 zur Aufnahme der Spannschraube 11 schräg durchsetzte Anlagefläche 20 auf, die gegen eine axiale Spannfläche 22 des Werkzeugträgers 12 anliegt. Der Halterkopf 16 ist mit einer randoffenen Ausnehmung 24 versehen, in der eine Wendeschneidplatte 26 so angeordnet ist, daß ihre wirksame Schneidenecke 28 nach der von der Anlagefläche 20 abgewandten Außenfläche 30 übersteht. Das Abstandsmaß f zwischen der Spannfläche 22 des Werkzeugträgers 12 und der Schneidenecke 28 kann durch die nachstehend näher erläuterte Verstellvorrichtung innerhalb gewisser Grenzen eingestellt werden.

Die Versteilvorrichtung umfaßt im wesentlichen einen parallel zur Anlagefläche 20 durch den Halterkopf 16 hindurchgehenden spaltförmigen Durchbruch 32, der im freien Bereich zwischen der Ausnehmung 24, der Anlagefläche 20 und dem Halterschaft 14 angeordnet ist und einen zum Halterschaft 14 hin offenen, durch die eingeschlossenen, in ihrer Querschnittsabmessung erweiterten Durchbruchenden 34,36 begrenzten bogenförmigen Verlauf aufweist. Die Durchbruchenden 34,36 sind in einer zur Anlagefläche 20 senkrechten Ebene angeordnet und begrenzen mit der Anlagefläche 20 bzw. der Außenfläche 30 je eine dünnwandige Materialbrücke 38,40. Der Halterkopf 16 ist im Bereich der beiden Materialbrücken 38,40 unter der Einwirkung eines Stellorgans 42 gegenüber dem Halterschaft 14 senkrecht zur Anlagefläche 20 elastisch verbiegbar.

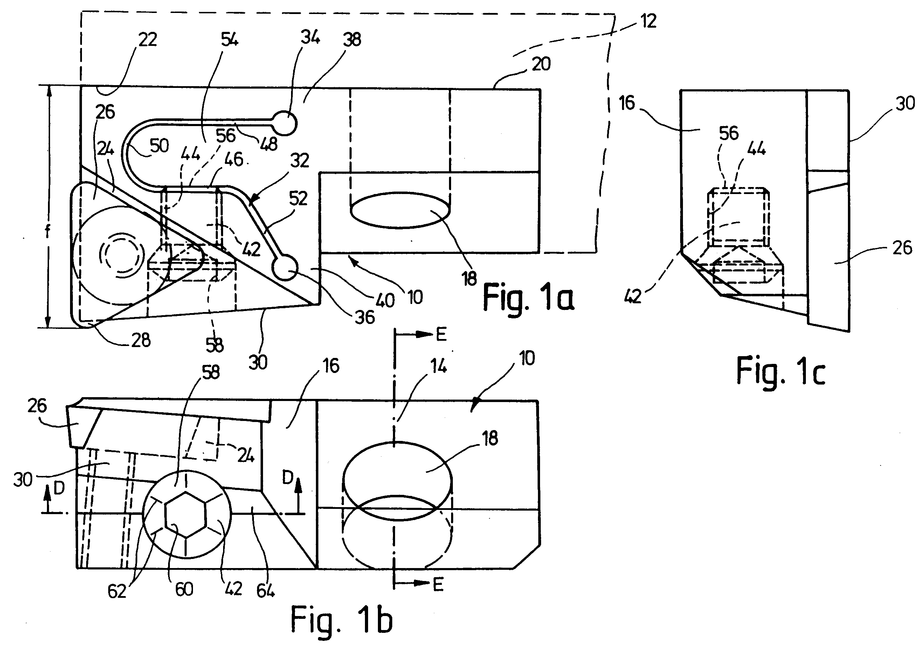

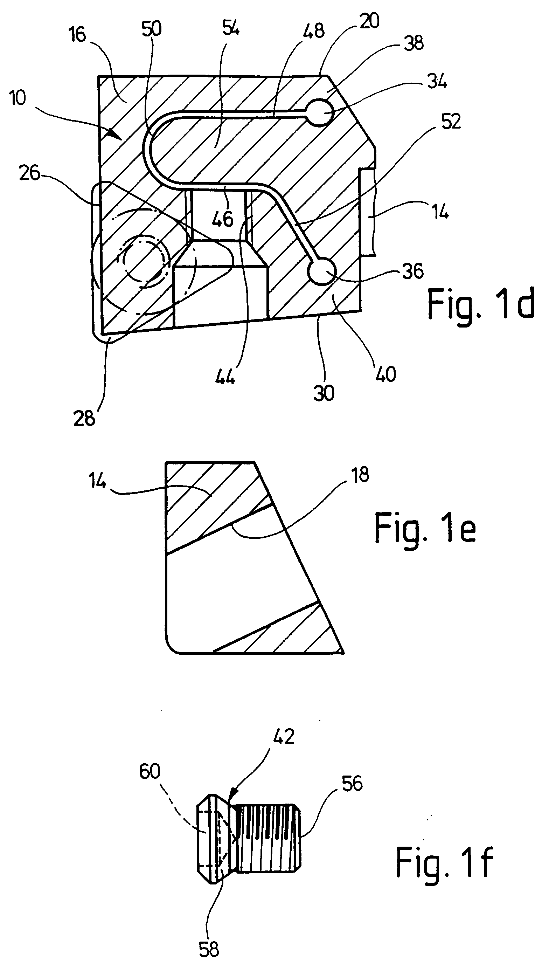

Wie insbesondere aus Fig. 1d zu ersehen ist, weist der Durchbruch je einen zur Anlagefläche 20 parallelen außenflächenseitigen Spaltabschnitt 46 und anlageflächenseitigen Spaltabschnitt 48 auf, die durch einen schaftfernen gebogenen Querabschnitt 50 miteinander verbunden sind. Während der anlageflächenseitige Spaltabschnitt 48 unmittelbar durch das anlageflächennahe Durchbruchende 34 begrenzt ist, ist der außenflächenseitige Spaltabschnitt 46 über einen schräg zur Schaftseite und zur Außenfläche 30 hin verlaufenden Schrägabschnitt 52 mit dem außenflächennahen Durchbruchende 36 verbunden. Auf diese Weise wird ein schaftfester Ausleger 54 gebildet, der mit seinen Außenflanken die Spaltabschnitte 46,48,50,52 innenseitig begrenzt.

Bei dem in Fig. 1a bis f gezeigten Ausführungsbeispiel ist das Stellorgan 42 durch eine Stellschraube gebildet, die in einem Innengewinde 44 des Halterkopfs 16 senkrecht zur Anlagefläche 20 geführt ist und mit ihrer abgeflachten Stirnfläche 56 den außenseitigen Spaltabschnitt 46 durchgreift und gegen den schaftfesten Ausleger 54 anpreßbar ist. Die Stellschraube 42 ist von der Außenfläche 30 des Halterkopfs 16 her zugänglich. Sie weist einen Kopf 58 mit einem Innensechskant 60 auf, der in seinem den Innensechskant 60 umgebenden Ringbereich eine Skalenteilung 62 trägt. Statt eines Nullstriches weist der Halterkopf 16 im Bereich seiner Außenfläche 30 eine radial zum Innengewinde 44 verlaufende Orientierungskante 64 auf. Durch Anziehen der Stellschraube 42 gegen den schaftfesten Ausleger 54 wird der Halterkopf 16 im Bereich der Materialbrücken 38,40 unter Verstellung des Abstandsmaßes f und unter Beibehaltung seiner Winkelorientierung gegenüber dem Halterschaft 14 elastisch nach außen gebogen. Die Abstandsänderung kann bei geeigneter Eichung direkt an der Skala 62 abgelesen werden.

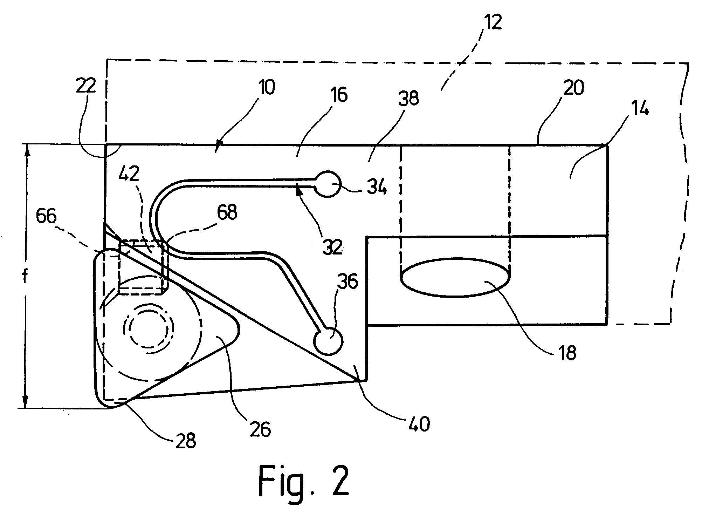

Bei dem in Fig. 2 gezeigten Ausführungsbeispiel weist der Halterkopf 16 ein parallel zur Anlagefläche 20 ausgerichtetes Innengewinde 66 auf, in dem eine stirnseitig zugängliche Stellschraube als Stellorgan 42 geführt ist. Die Stellschraube 42 liegt dort mit ihrem konischen Spitzenteil 68 gegen einen schrägen Teil des gekrümmten Querabschnitts 50 an und führt beim Anziehen zu einer Biegung des Halterkopfes 16 gegenüber dem Halterschaft 14 im Bereich der Materialbrücken 38,40 und damit zu einer Verstellung des Abstandsmaßes f.

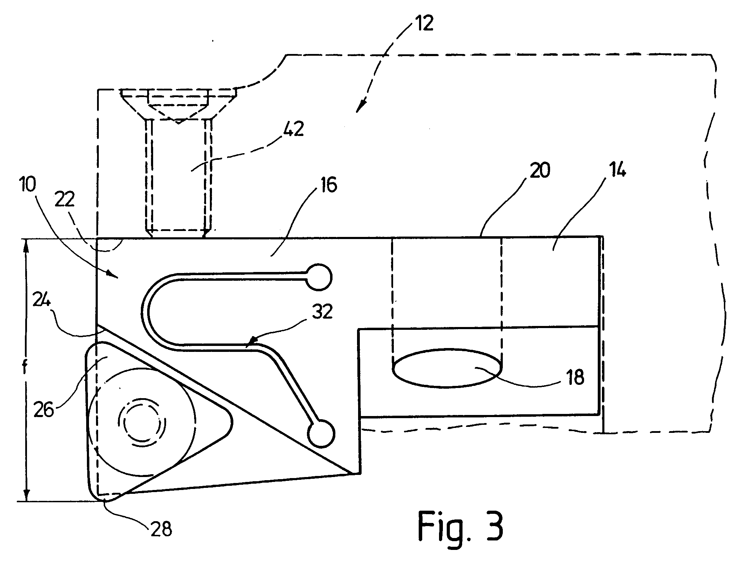

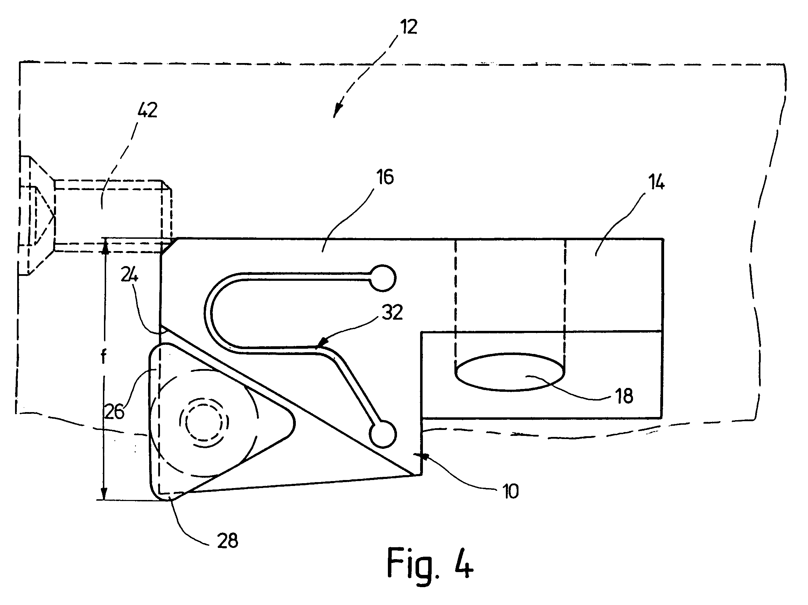

Bei den Ausführungsbeispielen nach Fig. 3 und 4 sind die Stellorgane 42 in Form einer radialen bzw. axialen Stellschraube im Werkzeugträger 12 angeordnet. Die Stellschraube liegt im Falle der Fig. 3 mit ihrer abgeflachten Spitze gegen die Anlagefläche 20 im Bereich des Halterkopfes 16 uni im Falle der Fig. 4 mit einem Außenkonus 68 gegen eine Keilfläche 70 im rückwärtigen stirnseitigen Bereich des Halterkopfes 16 an. Durch Anziehen der betreffenden Stellschrauben 42 wird der Halterkopf 16 im Bereich der Materialbrücken 38,40 elastisch gegenüber dem Halterschaft 14 unter Veränderung des Abstandsmaßes f nach außen gebogen.

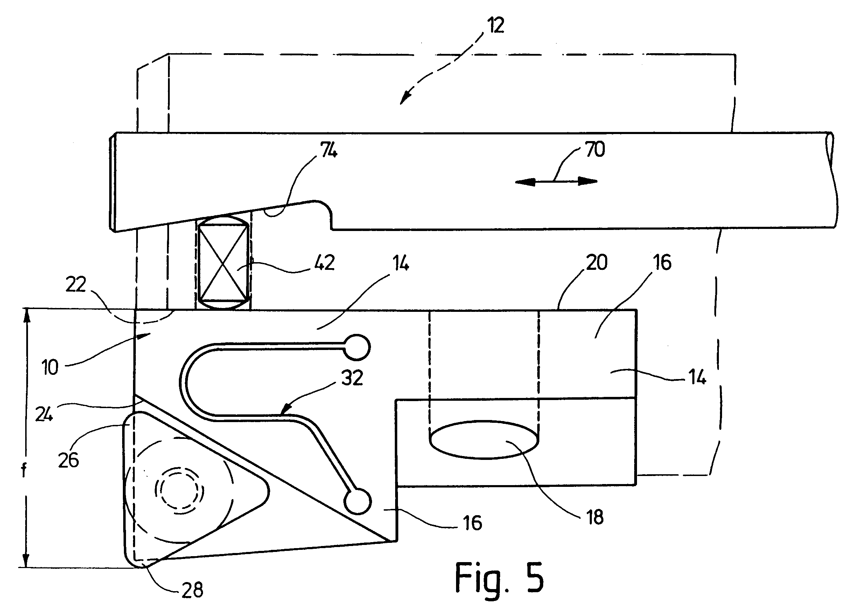

Bei dem Ausführungsbeispiel nach Fig. 5 ist statt der Stellschraube ein in einer Gleitführung des Werkzeugträgers 12 geführter Stellkörper als Stellorgan 42 vorgesehen, der über eine im Werkzeugträger 12 geführte, zentral über die Werkzeugmaschine in Richtung des Doppelpfeils 72 verschiebbare Stellstange 70 mit Keilschräge 74 betätigbar ist.

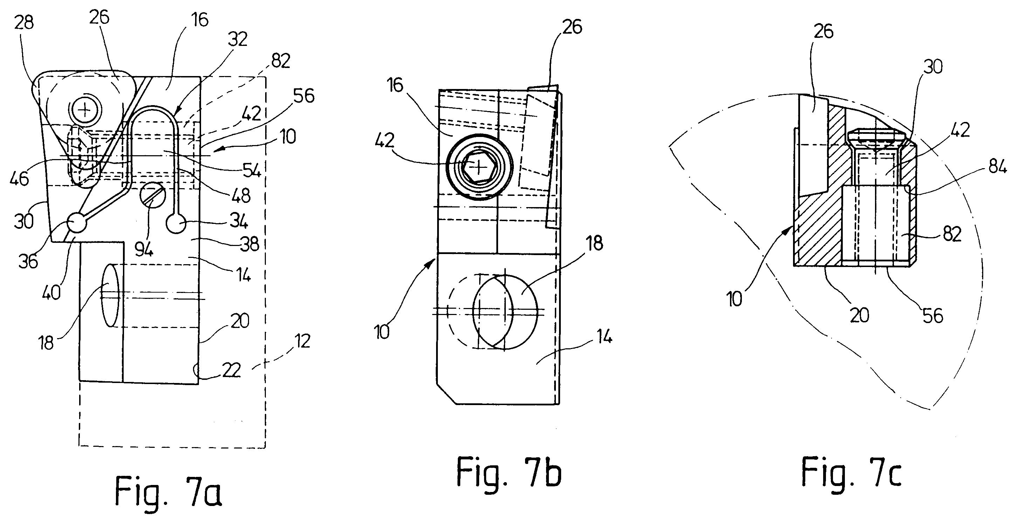

Bei den in Fig. 6a bis c und 7a bis c gezeigten Ausführungsbeispielen sind die Stellorgane 42 als durch den Halterkopf 16 durchgehende, mit ihrer abgeflachten Stirnfläche 56 an der Spannfläche 22 des Werkzeugträgers 12 abstützbare Stellschrauben ausgebildet, die durch das Innengewinde einer in einer Ausnehmung 80 des Halterkopfs 16 schwimmend angeordneten Gewindebüchse 82 hindurchgreift. Die Gewindebüchse 82 ist von der Anlagefläche 20 her in die Ausnehmung 80 eingesetzt und stützt sich mit ihrer Stirnkante 84 an einer zur Spannfläche 22 weisenden Ringschulter 84 innerhalb des Halterkopfes auf der Außenseite des außenflächenseitigen Spaltabschnitts 46 ab. Zur Drehsicherung der Gewindebüchse 82 weist bei dem Ausführungsbeispiel nach Fig. 6a bis c die Gewindebüchse 82 einen Sechskantabschnitt 86 auf, der in einen komplementären Innensechskant 88 der Ausnehmung 80 eingreift. Ein zylindrischer Zentrieransatz 90, der in einen zylindrischen Abschnitt 92 der Ausnehmung 80 eingreift, sorgt in diesem Falle für eine Zentrierung der Gewindebüchse 82 im Halterkopf 16. Bei dem Ausführungsbeispiel nach Fig. 7a bis c weist die Gewindebüchse 82 eine über die gesamte Höhe zylindrische Mantelfläche auf, die in der Ausnehmung 80 mit Hilfe einer die Mantelfläche schneidenden Sicherungsschraube 94 am Halterkopf 16 gegen Verdrehen gesichert ist. Durch Anziehen der Stellschraube 42 gegen die Spannfläche 22 des Werkzeughalters unter gleichzeitiger Abstützung der Gewindebüchse 82 an der Innenschulter 88 wird der Halterkopf 16 im Bereich der Materialbrücken 38, 40 unter Verstellen des Abstandsmaßes F elastisch nach außen gebogen.

Zusammenfassend ist folgendes festzustellen: Die Erfindung bezieht sich auf einen Klemmhalter für Wendeschneidplatten, der vor allem für Dreharbeiten verwendet wird. Der Klemmhalter besteht im wesentlichen aus einem Halterschaft 14 und einem mit diesem einstückig verbundenen Halterkopf 16. Der Halterschaft ist mit einer von einer Spannschraube schräg durchsetzten Anlagefläche 20 an einer achsparallelen Spannfläche eines Werkzeugträgers 12 befestigbar. Der Haltekopf 16 weist eine randoffene Ausnehmung 24 zur Aufnahme der mit einer wirksamen Schneidenecke 28 auf der von der Anlagefläche 20 abgewandten Außenfläche 30 einseitig überstehenden Wendeschneidplatte 26 auf. Um eine Verstellung des Abstands f zwischen Spannfläche 22 und Schneidenecke 28 zu ermöglichen, ist der Haltekopf 16 im freien Bereich zwischen Ausnehmung 24, Anlagefläche 20 und Halterschaft 14 mit einem spaltförmigen Durchbruch versehen, der eine zum Halterschaft 14 hin offene bogenförmige Querschnittskontur aufweist. Der Halterkopf ist unter der Einwirkung eines Stellorgans 42 gegenüber dem Halterschaft 14 elastisch verbiegbar.

## Patentansprüche

1. Klemmhalter für Schneidplatten, insbesondere Wendeschneidplatten, mit einem Halterschaft (14), der mit einer von einer Spannschraube vorzugsweise schräg durchsetzten Anlagefläche (20) an einer achsparallelen Spannfläche (22) eines vorzugsweise als Bohrstange ausgebildeten Werkzeugträgers (12) befestigbar ist, mit einem stirnseitig am Halterschaft (14) angeformten Halterkopf (16), der eine randoffene Ausnehmung (24) zur Aufnahme der im wesentlichen senkrecht zur Anlagefläche (20) ausgerichteten, mit einer wirksamen Schneidenecke (28) auf der von der Anlagefläche (20) abgewandten Außenfläche (30) des Halterkopfes (16) einseitig überstehenden Schneidplatte (26) aufweist, und mit einer Vorrichtung zur Verstellung des Abstands (f) zwischen der Spannfläche (22) und der wirksamen Schneidenecke (28), die einen durch den Halterkopf (16) im freien Bereich zwischen Ausnehmung (24), Anlagefläche (20) und Halterschaft (14) parallel oder schräg zur Anlagefläche (20) hindurchgehenden spaltförmigen Durchbruch (32) mit in das Halterkopfmaterial eingeschlossenen, im Abstand voneinander angeordneten Durchbruchenden (34,36) aufweist, wobei eines der Durchbruchenden (34) in der Nähe der Anlagefläche (20) und das andere Durchbruchende (36) in der Nähe der Außenfläche (30) des Halterkopfes (16) unter Bildung je einer dünnwandigen Materialbrücke (38, 40) angeordnet ist, und wobei der Halterkopf (16) im Bereich der beiden Materialbrücken (38,40) unter der Einwirkung eines Stellorgans (42) gegenüber dem Halterschaft (14) im wesentlichen senkrecht zur Anlagefläche (20) elastisch verbiegbar ist, **dadurch gekennzeichnet**, daß der spaltförmige Durchbruch (32) einen zum Halterschaft (14) hin randoffenen, durch die beiden schaftseitig angeordneten Durchbruchenden (34,36) begrenzten bogenförmigen Querschnittsverlauf aufweist, der sich auf der vom Halterschaft abgewandten Seite in den zwischen Ausnehmung (24) und Anlagefläche (20) liegenden Bereich des Halterkopfes (16) erstreckt.

2. Klemmhalter nach Anspruch 1, **dadurch gekennzeichnet**, daß die Durchbruchenden (34,36) in der Nähe des Halterschaftes (14) angeordnet sind.

3. Klemmhalter nach Anspruch 1 oder 2, **dadurch gekennzeichnet**, daß die Durchbruchenden (34,36) in einer zur Anlagefläche (20) senkrechten Ebene angeordnet sind.

4. Klemmhalter nach einem der Ansprüche 1 bis 3, wobei der Halterkopf (16) auf der der Anlagefläche (20) gegenüberliegenden Seite stufenförmig über den Halterschaft (14) übersteht, **dadurch gekennzeichnet**, daß das außenflächennahe Durchbruchende (36) im überstehenden Teil des Halterkopfes (16) angeordnet ist.

5. Klemmhalter nach einem der Ansprüche 1 bis 4, **dadurch gekennzeichnet**, daß der Durchbruch (32) einen außenflächenseitigen, vorzugsweise zur Anlagefläche (20) parallelen, innenseitig durch eine Flanke eines schaftfesten Auslegers begrenzten Spaltabschnitt (46) aufweist.

6. Klemmhalter nach einem der Ansprüche 1 bis 5, **dadurch gekennzeichnet**, daß der Durchbruch (32) einen anlageflächenseitigen, vorzugsweise zur Anlagefläche (20) parallelen, durch eine Flanke eines schaftfesten Auslegers (54) begrenzten Spaltabschnitt (48) aufweist.

7. Klemmhalter nach Anspruch 5 und 6, **dadurch gekennzeichnet**, daß der außenflächenseitige Spaltabschnitt (46) über einen schaftfernen, durch eine Stirnflanke des schaftfesten Auslegers (54) begrenzten Querabschnitt mit dem anlageflächenseitigen Spaltabschnitt (48) verbunden ist.

8. Klemmhalter nach Anspruch 6 oder 7, **dadurch gekennzeichnet**, daß der anlageflächenseitige Spaltabschnitt (48) schaftseitig durch das anlagenflächennahe Durchbruchende (34) begrenzt ist.

9. Klemmhalter nach einem der Ansprüche 5 bis 8, **dadurch gekennzeichnet**, daß sich an dem außenflächenseitigen Spaltabschnitt (46) ein schräg zur Seite des Halterschaftes (14) und zur Außenfläche (30) hin verlaufender, durch das außenflächennahe Durchbruchende (36) begrenzter Schrägabschnitt (52) anschließt.

10. Klemmhalter nach einem der Ansprüche 5 bis 9, **gekennzeichnet durch** eine von der Außenfläche (30) des Halterkopfes (16) aus betätigbare, in einem Innengewinde (44) des Halterkopfes im wesentlichen senkrecht zur Anlagefläche (20) geführte, den außenflächenseitigen Spaltabschnitt (46) durchdringende und mit ihrer vorzugsweise abgeflachten Stirnfläche (56) gegen die benachbarte Flanke des schaftfesten Auslegers (54) anpreßbare, das Stellorgan (42) bildende Stellschraube.

11. Klemmhalter nach einem der Ansprüche 7 bis 9, **gekennzeichnet durch** eine von der Stirnfläche des Halterkopfes (16) aus betätigbare, in einem Innengewinde (66) des Halterkopfes (16) im wesentlichen parallel zur Anlagefläche (20) geführte, den Querabschnitt (50) durchdringende und mit einem konischen Teil (68) ihrer Spitze gegen die schräge oder bogenförmige Stirnflanke des schaftfesten Auslegers (54) anpreßbare, das Stellorgan (42) bildende Stellschraube.

12. Klemmhalter nach einem der Ansprüche 1 bis 9, **dadurch gekennzeichnet**, daß das Stellorgan (42) als von der Außenfläche (30) her durch den Halterkopf (16) hindurchgreifende, mit ihrer Stirnfläche (56) gegen die Spannfläche (22) des Werkzeugträgers (12) anpreßbare Stellschraube ausgebildet ist.

13. Klemmhalter nach Anspruch 12, **dadurch gekennzeichnet**, daß die Stellschraube (42) quer durch den Ausleger (54) oder die beiden Spaltabschnitte (46,48) hindurchgreift.

14. Klemmhalter nach Anspruch 12 oder 13, **dadurch gekennzeichnet**, daß die Stellschraube (42) in einem vorzugsweise im Bereich außerhalb des Auslegers (54) unmittelbar in einem am Halterkopf (16) befindlichen Innengewinde geführt ist.

15. Klemmhalter nach einem der Ansprüche 1 bis 9 oder 12 bis 14, **gekennzeichnet durch** eine von der Anlagefläche (20) her in eine Ausnehmung (80) des Halterkopfs (16) verdrehungssicher eingesetzte, an einem zur Anlagefläche (20) weisenden Anschlag (88) des Halterkopfs (16) abstützbare Gewindebüchse (82), in deren Innengewinde von der Außenfläche (30) her eine das Stellorgan (42) bildende Stellschraube eingedreht ist.

16. Klemmhalter nach Anspruch 15, **dadurch gekennzeichnet**, daß die Stellschraube (42) durch die Gewindebüchse (82) hindurchgreift und mit ihrer Stirnfläche (56) gegen die Spannfläche (22) des Werkzeugträgers (12) anpreßbar ist.

17. Klemmhalter nach Anspruch 15 oder 16, **dadurch gekennzeichnet**, daß die Gewindebüchse (82) durch den schaftfesten Ausleger (54) des Halterschafts (14) und den außenflächenseitigen Spaltabschnitt (46) hindurchgreift.

18. Klemmhalter nach einem der Ansprüche 15 bis 17, **dadurch gekennzeichnet**, daß die Gewindebüchse (82) einen Mehrkantabschnitt (86) aufweist, der in einen komplementären Innenmehrkant (88) des Halterkopfs (16) und/oder des schaftfesten Auslegers (54) verdrehungssicher eingreift.

19. Klemmhalter nach einem der Ansprüche 15 bis 18, **dadurch gekennzeichnet**, daß der Anschlag (84) durch eine Innenschulter im Halterkopfmaterial auf der Außenseite des außenflächenseitigen Spaltabschnitts (46) gebildet ist.

20. Klemmhalter nach einem der Ansprüche 15 bis 19, **dadurch gekennzeichnet**, daß die Gewindebüchse (82) mittels einer Sicherungsschraube (94) oder eines Sicherungsstifts verdrehungsgesichert ist.

21. Klemmhalter nach einem der Ansprüche 1 bis 9, **dadurch gekennzeichnet**, daß das Stellorgan (42) in einer Gleit- oder Gewindeführung des Werkzeugträgers (12) geführt und mit einer Kraftkomponente in Verstellrichtung gegen den Halterkopf (16) anpreßbar ist.

22. Klemmhalter nach Anspruch 21, **dadurch gekennzeichnet**, daß das Stellorgan (42) als in einem vorzugsweise radial oder axial ausgerichteten Innengewinde des Werkzeugträgers (12) geführte, gegebenenfalls mit einer konischen Spitze versehene Stellschraube ausgebildet ist.

23. Klemmhalter nach Anspruch 21, **dadurch gekennzeichnet**, daß das Stellorgan einen in einer vorzugsweise radialen Gleitführung des Werkzeugträgers (12) geführten Stellkörper umfaßt, der über ein im Werkzeugträger angeordnetes, vorzugsweise eine Stellstange (70) mit Keilschräge (74) aufweisendes Keilgetriebe betätigbar ist.

24. Klemmhalter nach einem der Ansprüche 10 bis 22, **gekennzeichnet durch** eine an der Stellschraube (42) angeordnete Skalenteilung.

25. Klemmhalter nach einem der Ansprüche 1 bis 24, **dadurch gekennzeichnet**, daß die Durchbruchenden (34, 36) einen gegenüber der Spaltweite erweiterten, vorzugsweise kreisförmigen Querschnitt aufweisen.

26. Klemmhalter nach einem der Ansprüche 1 bis 25, **dadurch gekennzeichnet**, daß der spaltförmige Durchbruch gegenüber der Anlagefläche in Durchbruchrichtung um einen vorzugsweise von der Schneidplattenseite aus divergierenden Winkel von 1° bis 10°, vorzugsweise 2° bis 5° schräg verläuft.

27. Klemmhalter nach einem der Ansprüche 1 bis 26, **dadurch gekennzeichnet**, daß der spaltförmige Durchbruch (32) drahterodiert ist.

## Claims

1. A tool holder for inserts, especially indexable throwaway inserts, having a holder shank (14), which can be fastened with a contact face (20) passed through, preferably obliquely, by a tightening screw to an axis-parallel clamping face (22) of a tool carrier (12) preferably configured as a boring bar, having a holder head (16), which is formed on the front side onto the holder shank (14) and which includes a recess (24) open at the margin for the reception of the insert (26) which is aligned essentially perpendicular to the contact face (20) and protrudes on one side with an active tool nose (28) on the outer face (30) of the holder head (16) facing away from the contact face (20), and having a device for adjusting the distance (f) between the clamping face (22) and the active tool nose (28), which device includes a gap-shaped aperture (32), which, in the free region between recess (24), contact face (20) and holder shank (14), passes through the holder head (16) parallel or obliquely to the contact face (20) and has aperture ends (34, 36) which are enclosed in the holder head material and are spaced apart, one of the aperture ends (34) being disposed close to the contact face (20) and the other aperture end (36) being disposed close to the outer face (30) of the holder head (16), in each case forming a thin-walled material bridge (38, 40), and the holder head (16), in the region of the two material bridges (38, 40), being elastically bendable relative to the holder shank (14), under the influence of a control member (42), essentially perpendicular to the contact face (20), wherein the gap-shaped aperture (32) includes an arc-shaped cross-sectional course which is open at the margin toward the holder shank (14) and is limited by the two aperture ends (34, 36) disposed on the shank side, said cross-sectional course extending, on the side facing away from the holder shank, into that region of the holder head (16) lying between the recess (24) and contact face (20).

2. The tool holder as claimed in claim 1, wherein the aperture ends (34, 36) are disposed close to the holder shank (14).

3. The tool holder as claimed in claim 1 or 2, wherein the aperture ends (34, 36) are disposed in a plane perpendicular to the contact face (20).

4. The tool holder as claimed in one of claims 1 to 3, wherein the holder head (16), on the side lying opposite the contact face (20), protrudes in a step shape over the holder shank (14), wherein the aperture end (36) lying close to the outer face is disposed in the protruding part of the holder head (16).

5. The tool holder as claimed in one of claims 1 to 4, wherein the aperture (32) includes a gap segment (46) located on the outer face side, which gap segment lies preferably parallel to the contact face (20) and is limited on the inner side by a flank of a shank-fixed extension arm.

6. The tool holder as claimed in one of claims 1 to 5, wherein the aperture (32) exhibits a gap segment (48) located on the contact face side, which gap segment lies preferably parallel to the contact face (20) and is limited by a flank of a shank-fixed extension arm (54).

7. The tool holder as claimed in claims 5 and 6, wherein the gap segment (46) located on the outer face side is connected, via a shank-remote transverse segment limited by an end flank of the shank-fixed extension arm (54), to the gap segment (48) located on the contact face side.

8. The tool holder as claimed in claim 6 or 7, wherein the gap segment (48) located on the contact face side is limited on the shank side by the aperture end (34) lying close to the contact face.

9. The tool holder as claimed in one of claims 5 to 8, wherein the gap segment (46) located on the outer face side is adjoined by an oblique segment (52) running obliquely to the side of the holder shank (14) and in the direction of the outer face (30) and limited by the aperture end (36) lying close to the outer face.

10. The tool holder as claimed in one of claims 5 to 9, which comprises a setting screw forming the control member (42), which setting screw can be actuated from the outer face (30) of the holder head (16), is guided in an internal thread (44) of the holder head essentially perpendicularly to the contact face (20), penetrates the gap segment (46) located on the outer face side and can be pressed with its preferably flattened end face (56) against the adjacent flank of the shank-fixed extension arm (54).

11. The tool holder as claimed in one of claims 7 to 9, which comprises a setting screw forming the control member (42), which setting screw can be actuated from the end face of the holder head (16), is guided within an internal thread (66) of the holder head (16) essentially parallel to the contact face (20), penetrates the transverse segment (50) and can be pressed with a conical part (68) of its tip against the oblique or arc-shaped end flank of the shank-fixed extension arm (54).

12. The tool holder as claimed in one of claims 1 to 9, wherein the control member (42) is configured as a setting screw which reaches from the outer face (30) through the holder head (16) and can be pressed with its end face (56) against the clamping face (22) of the tool carrier (12).

13. The tool holder as claimed in claim 12, wherein the setting screw (42) extends transversely through the extension arm (54) or the two gap segments (46, 48).

14. The tool holder as claimed in claim 12 or 13, wherein the setting screw (42) is guided within an internal thread located preferably in the region outside the extension arm (54) directly on the holder head (16).

15. The tool holder as claimed in one of claims 1 to 9 or 12 to 14, which comprises a threaded bushing (82) which is inserted from the contact face (20), in twist-proof securement, in a recess (80) of the holder head (16) and is supportable against a stop (88) of the holder head (16), which stop points toward the contact face (20), in the internal thread of which threaded bushing there is screwed, from the outer face (30), a setting screw forming the control member (42).

16. The tool holder as claimed in claim 15, wherein the setting screw (42) extends through the threaded bushing (82) and can be pressed with its end face (56) against the clamping face (22) of the tool carrier (12).

17. The tool holder as claimed in claim 15 or 16, wherein the threaded bushing (82) extends through the shank-fixed extension arm (54) of the holder shank (14) and the gap segment (46) located on the outer face side.

18. The tool holder as claimed in one of claims 15 to 17, wherein the threaded bushing (82) includes a polygonal segment (86) which engages in twist-proof securement in a complementary polygonal socket (88) of the holder head (16) and/or of the shank-fixed extension arm (54).

19. The tool holder as claimed in one of claims 15 to 18, wherein the stop (84) is formed by an inner shoulder in the holder head material on the outer side of the gap segment (46) located on the outer face side.

20. The tool holder as claimed in one of claims 15 to 19, wherein the threaded bushing (82) is secured against twisting by means of a securing screw (94) or securing pin.

21. The tool holder as claimed in one of claims 1 to 9, wherein the control member (42) is guided in a slideway or threaded guide of the tool carrier (12) and can be pressed with a force component, in the direction of adjustment, against the holder head (16).

22. The tool holder as claimed in claim 21, wherein the control member (42) is configured as a setting screw which is guided in a preferably radially or axially aligned internal thread of the tool carrier (12) and is provided, where necessary, with a conical tip.

23. The tool holder as claimed in claim 21, wherein the control member comprises a control body which is guided in a preferably radial slideway of the tool carrier (12) and can be actuated by means of a wedge gearing disposed in the tool carrier and preferably including a control rod (70) having a wedge bevel (74).

24. The tool holder as claimed in one of claims 10 to 22, which comprises a scale graduation disposed on the setting screw (42).

25. The tool holder as claimed in one of claims 1 to 24, wherein the aperture ends (34, 36) includes a cross section which is widened relative to the gap width and is preferably circular.

26. The tool holder as claimed in one of claims 1 to 25, wherein the gap-shaped aperture runs obliquely relative to the contact face, in the direction of the aperture, at an angle, diverging preferably from the insert side, of 1° to 10°, preferably 2° to 5°.

27. The tool holder as claimed in one of claims 1 to 26, wherein the gap-shaped aperture (32) is wire-spark-eroded.

## Revendications

1. Porte-plaquette pour matrices de découpage, notamment pour plaquettes réversibles, comprenant une tige de porte-plaquette (14)qui peut être fixée avec une surface d'appui (20) traversée, de préférence en biais, par une vis de serrage, sur une surface de serrage (22) parallèle à l'axe d'un porte-outil (12) conformé de préférence en tige porte-foret, une tête de porte-plaquette (16) conformée du côté frontal sur la tige de porte-plaquette (14) et présentant un évidement (24) ouvert au bord et destiné à recevoir la plaquette réversible (26) orientée sensiblement perpendiculairement à la surface d'appui (20), dont le point d'attaque (28) actif dépasse unilatéralement de la surface extérieure (30) de la tête de porte-plaquette (16), détournée de la surface d'appui (20), et un dispositif pour la variation de la distance (f) entre la surface de serrage (22) et le point d'attaque (28) actif, qui présente un ajour (32) en forme de fente lequel traverse la tête de porte-plaquette (16) dans la région libre entre l'évidement (24), la surface d'appui (20) et la tige de porte-plaquette (14), parallèlement ou en oblique par rapport à la surface d'appui (20), avec des extrémités d'ajour (34, 36) enfermées dans le matériau de la tête de porte-plaquette et disposées à distance l'une de l'autre, l'une des extrémités d'ajour (34) étant située à proximité de la surface d'appui (20) et l'autre extrémité d'ajour (36) se trouvant à proximité de la surface extérieure (30) de la tête de porte-plaquette (16), respectivement avec formation d'un pont de matière (38, 40) à paroi mince, et la tête de porte-plaquette (16) pouvant être cintrée élastiquement, sous l'action d'un organe de réglage (42), dans la région des deux ponts de matière (38, 40), par rapport à la tige de porte-plaquette (14) et sensiblement perpendiculairement à la surface d'appui (20),
**caractérisé en ce** que l'ajour (32) en forme de fente présente un tracé de la section transversale ouvert au bord en direction de la tige de porte-plaquette (14), délimité par les deux extrémités d'ajour (34, 36) disposées du côté tige, lequel s'étend, du côté détourné de la tige de porte-plaquette, dans la région de la tête de porte-plaquette (16) située entre l'évidement (24) et la surface d'appui (20).

2. Porte-plaquette selon la revendication 1, caractérisé en ce que les extrémités d'ajour (34, 36) sont disposées à proximité de la tige de porte-plaquette (14).

3. Porte-plaquette selon la revendication 1 ou 2, caractérisé en ce que les extrémités d'ajour (34, 36) se situent dans un plan perpendiculaire à la surface d'appui (20).

4. Porte-plaquette selon l'une des revendications 1 à 3, dans lequel la tête de porte-plaquette (16) dépasse de manière étagée de la tige de porte-plaquette (14) sur le côté opposé à la surface d'appui (20), caractérisé en ce que l'extrémité d'ajour (36) proche de la surface extérieure est disposée dans la partie en saillie de la tête de porte-plaquette (16).

5. Porte-plaquette selon l'une des revendications 1 à 4, caractérisé en ce que l'ajour (32) comporte une section de fente (46) qui, du côté de la surface extérieure, est de préférence parallèle à la surface d'appui (20) et délimitée, du côté intérieur, par un flanc d'un avant-bras solidaire de la tige.

6. Porte-plaquette selon l'une des revendications 1 à 5, caractérisé en ce que l'ajour (32) comporte une section de fente (48) qui, du côté de la surface d'appui, est de préférence parallèle à la surface d'appui (20) et délimitée par un flanc d'un avant-bras (54) solidaire de la tige.

7. Porte-plaquette selon les revendications 5 et 6, caractérisé en ce que la section de fente (46) située du côté de la surface extérieure est raccordée a la section de fente (48) située du côté de la surface d'appui par l'intermédiaire d'une section transversale éloignée de la tige et délimitée par un flanc frontal de l'avant-bras (54) solidaire de la tige.

8. Porte-plaquette selon la revendication 6 ou 7, caractérisé en ce que la section de fente (48) située du côté de la surface d'appui est délimitée du côté tige par l'extrémité d'ajour (34) proche de la surface d'appui.

9. Porte-plaquette selon l'une des revendications 5 à 8, caractérisé en ce qu'à la section de fente (46) située du côté de la surface extérieure se raccorde une section oblique (52) qui s'étend en biais vers le côté de la tige de porte-plaquette (14) et vers la surface extérieure (30) et qui est délimitée par l'extrémité d'ajour (36) située à proximité de la surface extérieure.

10. Porte-plaquette selon l'une des revendications 5 à 9, caractérisé en ce qu'il comprend une vis de réglage formant l'organe de réglage (42), qui peut être actionnée à partir de la surface extérieure (30) de la tête de porte-plaquette (16), est guidée dans un filetage intérieur (44) de la tête de porte-plaquette, sensiblement perpendiculairement à la surface d'appui (20), traverse la section de fente (46) située du côté de la surface extérieure, et pouvant être serrée avec sa surface frontale (56), de préférence aplatie, contre le flanc voisin de l'avant-bras (54) solidaire de la tige.

11. Porte-plaquette selon l'une des revendications 7 à 9, caractérisé en ce qu'il comprend une vis de réglage formant l'organe de réglage (42), qui peut être actionnée à partir de la surface frontale de la tête de porte-plaquette (16), est guidée dans un filetage intérieur (66) de la tête de porte-plaquette (16), sensiblement parallèlement à la surface d'appui (20), traverse la section transversale (50), et pouvant être serrée avec une partie conique (68) de sa pointe contre le flanc frontal oblique ou en forme d'arc de l'avant-bras (54) solidaire de la tige.

12. Porte-plaquette selon l'une des revendications 1 à 9, caractérisé en ce que l'organe de réglage (42) est réalisé sous la forme d'une vis de réglage qui traverse la tête de porte-plaquette (16) à partir de la surface extérieure (30) et peut être bloquée avec sa surface frontale (56) contre la surface de serrage (22) du porte-outil (12).

13. Porte-plaquette selon la revendication 12, caractérisé en ce que la vis de réglage (42) s'étend transversalement au travers de l'avant-bras (54) ou des deux sections de fente (46, 48).

14. Porte-plaquette selon la revendication 12 ou 13, caractérisé en ce que la vis de réglage (42) est guidée dans un filetage intérieur disposé de préférence dans la région à l'extérieur de l'avant-bras (54), immédiatement sur la tête de porte-plaquette (16).

15. Porte-plaquette selon l'une des revendications 1 à 9 ou 12 à 14, caractérisé en ce qu'il comprend une douille taraudée (82) insérée de manière rigide en rotation dans un évidement (80) de la tête de porte-plaquette (16) à partir de la surface d'appui (20) et pouvant s'appuyer sur une butée (88) de la tête de porte-plaquette (16), dirigée vers la surface d'appui (20), dans le filetage intérieur de laquelle est vissée, à partir de la surface extérieure (30), une vis de réglage formant l'organe de réglage (42).

16. Porte-plaquette selon la revendication 15, caractérisé en ce que la vis de réglage (42) traverse le filetage intérieur (82) et peut être bloquée avec sa surface frontale (56) contre la surface de serrage (22) du porte-outil (12).

17. Porte-plaquette selon la revendication 15 ou 16, caractérisé en ce que la douille taraudée (82) s'étend au travers de l'avant-bras (54) solidaire de la tige de porte-plaquette (14) et de la section de fente (46) située du côté de la surface extérieure.

18. Porte-plaquette selon l'une des revendications 15 à 17, caractérisé en ce que la douille taraudée (82) comporte une section polygonale (86) qui s'engage de manière rigide en rotation dans un polygone creux (88) complémentaire de la tête de porte-plaquette (16) et/ou de l'avant-bras (54) solidaire de la tige.

19. Porte-plaquette selon l'une des revendications 15 à 18, caractérisé en ce que la butée (84) est constituée par un épaulement intérieur dans le matériau de la tête de porte-plaquette, sur la surface extérieure de la section de fente (46) située du côté de la surface extérieure.

20. Porte-plaquette selon l'une des revendications 15 à 19, caractérisé en ce que la douille taraudée (82) est bloquée en rotation au moyen d'une vis d'arrêt (94) ou d'une goupille de sécurité.

21. Porte-plaquette selon l'une des revendications 1 à 9, caractérisé en ce que l'organe de réglage (42) est guidé dans une coulisse ou un filetage du porte-outil (12) et peut être appliqué contre la tête de porte-plaquette (16) avec une composante de force orientée dans la direction de déplacement.

22. Porte-plaquette selon la revendication 21, caractérisé en ce que l'organe de réglage (42) est réalisé sous la forme d'une vis de réglage guidée dans un filetage intérieur du porte-outil (12), orienté de préférence dans le sens radial ou axial, et munie, le cas échéant, d'une pointe conique.

23. Porte-plaquette selon la revendication 21, caractérisé en ce que l'organe de réglage comprend un corps de réglage guidé dans une coulisse radiale du porte-outil (12), qui peut être actionné par l'intermédiaire d'une commande à clavette disposée dans le porte-outil et comportant de préférence une tige de manoeuvre (70) avec chanfrein de clavette (74).

24. Porte-plaquette selon l'une des revendications 10 à 22, caractérisé en ce qu'il comprend une graduation prévue sur la vis de réglage (42).

25. Porte-plaquette selon l'une des revendications 1 à 24, caractérisé en ce que les extrémités (34, 36) de l'ajour présentent une section transversale élargie par rapport à la largeur de la fente, de préférence de forme circulaire.

26. Porte-plaquette selon l'une des revendications 1 à 25, caractérisé en ce que l'ajour en forme de fente s'étend par rapport à la surface d'appui, en oblique dans la direction de l'ajour, sous un angle de 1° à 10°, de préférence de 2° à 5°, qui diverge de préférence à partir du côté de la plaquette.

27. Porte-plaquette selon l'une des revendications 1 à 26, caractérisé en ce que l'ajour (32) en forme de fente est érodé par fil.
